Europäisches Patentamt

European Patent Office

Office européen des brevets

(19)

(11) Publication number: **0 183 792 B1**

# EUROPEAN PATENT SPECIFICATION

(45) Date of publication of patent specification: **18.09.91**   (51) Int. Cl.⁵: **H02K 37/00, H02K 41/00**

(21) Application number: **85902860.7**

(22) Date of filing: **21.05.85**

(86) International application number:
**PCT/US85/00955**

(87) International publication number:
**WO 85/05507 (05.12.85 85/26)**

(54) MAGNETICALLY ASSISTED STEPPING MOTOR.

(30) Priority: **21.05.84 US 612563**
**20.05.85 US 735935**

(43) Date of publication of application:
**11.06.86 Bulletin 86/24**

(45) Publication of the grant of the patent:
**18.09.91 Bulletin 91/38**

(84) Designated Contracting States:
**AT BE CH DE FR GB IT LI LU NL SE**

(56) References cited:
EP-A- 0 158 935     DE-A- 2 912 688
DE-A- 3 335 626     FR-A- 2 131 979
FR-A- 2 259 472     US-A- 2 312 101
US-A- 3 500 081     US-A- 3 858 308
US-A- 4 025 810     US-A- 4 306 164

IBM TECHNICAL DISCLOSURE BULLETIN, vol.
6, no. 9, February 1964, pages 19-20, New
York, US; L.J. THOMPSON: "Linear incre-
mental motor"

(73) Proprietor: **PACIFIC SCIENTIFIC COMPANY**
**4301 Kishwaukee Street**
**Rockford, IL 61106(US)**

(72) Inventor: **HORBER, Ralph**
**P.O. Box 181 Peterson Past**
**Warshfield, MA 02050(US)**
Inventor: **GAMBLE, John**
**8 K Beals Cover Road**
**Himgham, MA 02043(US)**

(74) Representative: **Ellis, Edward Lovell et al**
**MEWBURN ELLIS & CO. 2/3 Cursitor Street**
**London EC4A 1BQ(GB)**

EP 0 183 792 B1

PATENTS ABSTRACTS OF JAPAN, vol. 8, no.
198 (E-265)[1635], 11th September 1984; & JP
- A - 59 86 466 (YASUKAWA DENKI
SEISAKUSHO K.K.) 18-05-1984

PATENTS ABSTRACTS OF JAPAN, vol. 9, no.
4, (E-288)[1727], 10th January 1985; & JP - A -
59 153 457 (SANYOU DENKI K.K.) 01-09-1984

MACHINE DESIGN, vol. 57, no. 9, 25th April
1985, pages 23-25, 28-29, Cleveland, Ohio,
US; R.W. HORBER: "High torque from hybird
stepper motors"

**Description**

This invention relates to electric motors and particularly to stepping motors.

Generally, a stepping motor includes a rotor with outwardly-projecting peripherally-spaced longitudinally-extending rotor teeth which interact with inwardly-projecting peripherally-spaced longitudinally-extending stator teeth. The latter are mounted in sets on peripherally-spaced inwardly-projecting longitudinally-extending stator poles such that the stator teeth on one pole may align with the opposing rotor teeth while teeth on the adjacent pole are partially misaligned with the rotor teeth and stator teeth on the next peripherally spaced pole align with the valleys between opposing rotor teeth. In a so-called "hybrid" motor, rotors contain two axially aligned sections with the teeth of one section aligned with the valleys of the other section. A permanent magnet between the two rotor sections magnetizes the sections in opposite polarities. Appropriately energizing coils on the stator poles causes an interaction between the stator and rotor teeth that turns the rotor. In so-called variable reluctance stepping motors, the rotor with its rotor teeth is composed of soft magnetic material. The stator coils form a rotating field that moves the rotor incrementally. Such motors have limited efficiencies and other disadvantages.

Attempts have been made to increase the efficiencies of such motors, and to reduce such disadvantages as noise generated by them, by making the pitches on the stator teeth different from those on the rotor teeth. Attempts have also been made to increase torque by intensifying magnetic fields with stronger permanent magnets. Further efforts have been directed toward various techniques of energizing stator windings. However, the basic power and efficiency available from such motors has been limited.

A low inertia stepping motor is disclosed in US Patent Specification 3,500,081. In this construction a pair of laminated rotor sections is mounted on a shaft in predetermined spaced apart relation. A cylindrical permanent magnet element is located therebetween and supported in stationary relation thereto by adjustable support means for centering the magnet relative to the rotor sections. The rotor members and the pole pieces of the stepping motor are each provided with a plurality of grooves defining spaced teeth.

The motor disclosed in German Patent Specification 2,912,668 also provides grooves located between teeth for holding permanently magnetized inserts. However, it should be noted that in this motor the polarity of the magnetized inserts runs in the axial direction and not transversely.

It is an object of the present invention to overcome the deficiencies of existing motors.

According to the present invention there is provided a stepping motor, including:

(a) a stator;

(b) a mover movable relative to said stator and having surfaces facing the stator;

(c) a plurality of poles on said stator, the poles having actuating surfaces, said surfaces facing the mover;

(d) a winding on each of said poles;

(e) a plurality spaced stator sections of soft magnetic material at the surfaces of said poles, each of said poles having at least one section;

(f) a plurality of spaced mover sections of soft magnetic material at the surfaces facing the stator and located for movement along areas in a direction past said stator pole sections;

(g) the facing sections of the stator and mover creating gaps between said sections, selective energization of the poles creating flux paths between oppositely energized stator poles which transverse two gaps and the mover; and

(h) spaces formed by said mover sections and said stator sections, said spaces being positioned along the areas of relative mover-stator movement and having depths transverse to the areas of movement;

characterized in that said motor further includes:

(i) a plurality of permanently magnetized inserts located adjacent the plurality of stator sections and/or the plurality of mover sections, which inserts are poled in the direction of the depth of the spaces transverse to the areas.

The inserts may:

(a) be located in spaces adjacent the stator sections of soft magnetic material;

(b) be located in spaces adjacent the mover sections of soft magnetic material;

(c) be located in the spaces adjacent the mover sections and stator sections of soft magnetic material.

The mover sections may extend substantially transverse to the direction of movement and to the direction of the depth.

Alternatively the mover sections may be skewed relative to an orientation transverse to the direction of movement and to the depth by a fraction of a tooth pitch.

The permanent magnetic inserts may include samarium cobalt, or a neodymium-boron alloy.

The mover may be either a linear actuator and said poles are linearly aligned, or a rotator for rotating about an axis relative to said stator.

## BRIEF DESCRIPTION OF THE DRAWINGS:

In the drawings:

Fig. 1 is a block diagram of a motor system.

Fig. 2 is a sectional drawing of a motor embodying features of the invention.

Fig. 3 is a section 3-3 of Fig. 2.

Fig. 4 is a schematic illustration showing the manner of energizing the poles of the stator in Figs. 2 and 3.

Fig. 5 is a sectional view illustrating the magnetization of portions in Figs. 2 and 3.

Fig. 6 is a radial section of another motor embodying feature of the invention.

Fig. 7 is a section 7-7 of Fig. 6.

Fig. 8 shows another embodiment of the invention.

Fig. 9 is a graph illustrating the torque produced relative to current of the motors of Figs. 2 to 7.

Fig. 10 is a graph showing the torque produced relative to speed at a given current of the motors of Figs. 1-9.

Figs. 11 and 12 are schematic representations of linear motors embodying the invention.

Figs. 13 to 15 illustrate portions of other embodiments of the invention.

Figs. 16 and 17 are schematic representations of linear motors embodying the invention.

## DESCRIPTION OF THE PREFERRED EMBODIMENT:

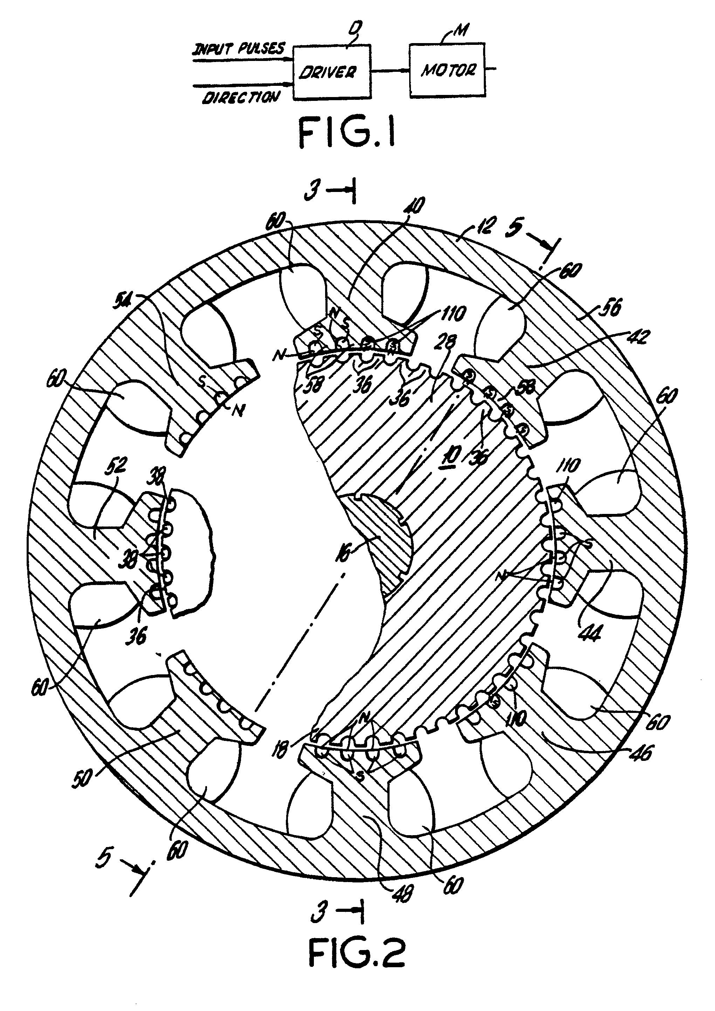

In Fig. 1 a driver D receives control pulses from an external source (not shown) and drives a motor M. The driver also receives an external rotation direction signal which instructs the drive D to rotate the motor in one or the other direction.

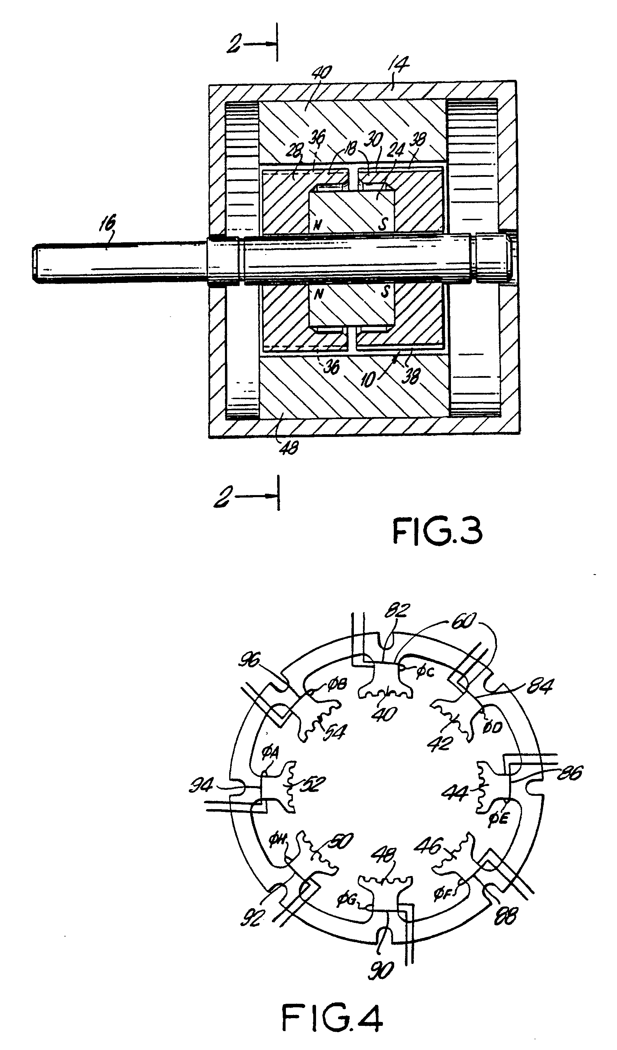

The motor M appears in more detail in Figs. 2 and 3. In Figs. 2 and 3, the rotor 10 rotates within a stator 12 mounted within a housing schematically shown as 14. Other than the windings the motor shown is conventional. A shaft 16 projects through the housing and is keyed to the rotor 10 for rotation therewith. Suitable bearings not shown mount the rotor 10 and the shaft 16 to be rotatable within the housing 14.

As specifically shown in Fig. 3 the rotor 10 is composed of a permanent magnet 24 and two cap-shaped rotor pole shoes 28 and 30 encapsulating the magnet 24 at its axial end to form front and rear rotor segments. The pole shoes 28 and 30 for simplicity, will also be referred to as rotor segments. As more particularly shown in Fig. 2, the rotor segment 28 carries fifty peripherally spaced teeth 36 projecting radially outward. Of course, the number of teeth shown is only an example. Other embodiments of the invention utilize pole shoes with other numbers of teeth such as 40 or 48. In the example shown, the angular or peripheral tooth pitch, that is, the angular distance between like points on adjacent rotor teeth 36 is 7.2 degrees. As is readily ascertainable from Fig. 3, the entire segment 28 is magnetized by the permanent magnet 24 to exhibit a north polar magnetization. Although not shown, the teeth 36 are spaced about the entire periphery of the rotor segment 28. The teeth extend longitudinally along the axial direction of the rotor.

The rotor segment 30 is identical to the segment 28 and carries outwardly directed peripherally spaced radial teeth 38. However, the segment 30 is mounted on or keyed to the shaft 16 so that the rotor teeth are angularly offset by one-half tooth pitch and so they appear, looking axially, midway between the teeth 36. This is shown most precisely in the left hand portion of the rotor in Fig. 2. For simplicity, the rotor teeth 38 sticking out between and behind the rotor teeth 36 are not illustrated in the remainder of the rotor. However, it should be understood that rotor teeth do, in fact, exist in these locations behind the rotor segment 28.

As shown in Fig. 2, eight angularly displaced poles 40, 42, 44, 46, 48, 50, 52, and 54, project inwardly from a common circumscribing stator portion 56 to form the stator 12. The poles extend longitudinally along the entire axial dimension of the stator 12 beyond the rotor 10. Five stator pole teeth or stator teeth 58 form the inner radial ends of each pole 40 to 54. The pole teeth are formed along an imaginary cylindrical surface coaxial with the rotor and spaced slightly from the rotor teeth 36 and 38. In the embodiment shown, the pole teeth are pitched at 7.2 degrees. Thus, they have the same pitch as the rotor teeth 36 and 38. In this embodiment the rotor tooth pitch and the stator tooth pitch are the same. In others they are different. The poles 40 to 54 and their respective teeth 58 are angularly arranged so that the teeth on two opposite poles such as 40 and 48 can directly oppose the rotor teeth 36 on one pole shoe when teeth on poles 44 and 52 ninety degrees therefrom are completely out of alignment with the teeth 36 on the same pole shoe. The teeth 36 on the remaining forty-five degree angularly oriented poles 42, 46, 50, and 54 are angularly arranged so that they are ninety electrical degrees and 270 electrical degrees out of phase with the angular alignment of the rotor teeth 36 of the same pole shoe, in the same position.

The pole teeth 58 extend longitudinally parallel to the rotor axis from one end of the rotor 10 to the other. Thus, when the teeth 58 on the pole 52 and 44 are 180 electrical degrees out of alignment with the teeth 36 of the segment 28, they are completely aligned with the teeth 38 on the segment 30. At the same time the teeth 58 on the poles 40 and 48 are completely out of alignment with the teeth 38.

Stator coils 60 are used to magnetize the poles 40 to 54 in a sequence that causes rotation of the rotor. Details of the stator coils 60 and their arrangement on the stator appear schematically in Fig. 4. Here the eight coils are formed of eight respective windings 82, 84, 86, 88, 90, 92, 94, and 96 each representing one of eight phases P1 to P8.

In a typical conventional motor the poles are unenergized (O) or energized to produce a magnetic North (N) and South (S) pole sequence S-O-N-O-S-O-N-O of from one pole to the peripherally adjacent pole. A driver then responds to a pulse to change the magnetization sequence of the same poles to O-S-O-N-O-S-O-N, and to the next pulses to change the sequences to N-O-S-O-N-O-S-O, and O-N-O-S-O-N-O-S.. etc. As a result the rotor turns 1/4 rotor tooth pitch, i.e., one-quarter of the angular distance between corresponding portions of adjacent rotor teeth, in response to each pulse. Hence, each pulse moves the resultant magnetic vector 45° but moves the rotor only 1/4 rotor tooth pitch. This quarter rotor tooth pitch is referred to as one rotor step in an eight pole motor.

The poling of the poles may be achieved either by the circuit shown in Fig. 4 where the polarity of current in the coils surrounding the stator poles is reversed electrically, or by surrounding each stator pole with two windings whose connections and winding directions are arranged to produce opposite polarities in response to the same energization and by switching between windings.

Typical means of driving the windings and different winding arrangements are well known. They are shown, for example, in. U.S. Patent No. 4,255,696, of John H. Field, assigned to the same assignee as this application.

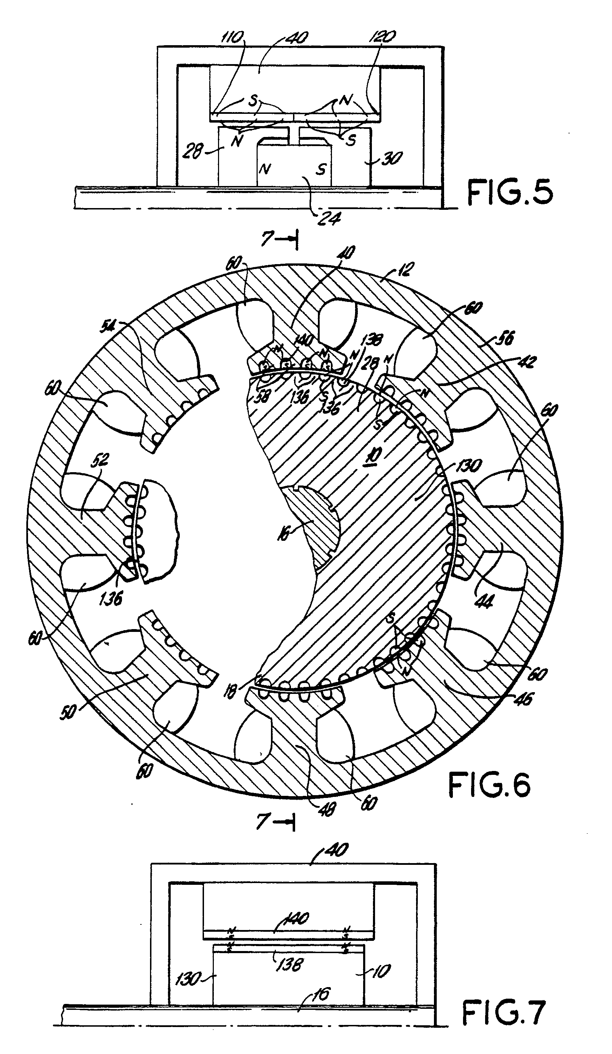

According to the invention, the valleys between the stator teeth are filled with a high magnetic coercivity material such as samarium cobalt ($SmCo_5$). According to other embodiments of the invention, any magnetic rare earth cobalt or neodymium boron iron alloys or Ferrites or Alnicos are used. Included among the known magnetic rare earth materials are Nd and Sm. The magnets in the stator tooth valleys are magnetized as shown in Fig. 5. The motor is wound and driven as hereinbefore described or like any other two-phase hybrid stepping motor.

The effect of the magnetic materials 110 and 120 is to repel a flux from the adjacent rotor teeth and thereby concentrate the flux from the adjacent rotor teeth for interaction with the adjacent stator teeth. As shown for the poles 40 to 48 in Fig. 2, the interior surface of the material 110 in the stator valley is north polar. The opposing rotor teeth are also also north polar because of the magnetization of the magnet 24. Hence, the material 110 tends to repel the flux from the teeth 36 and concentrates it into the teeth 58.

If during the first pulse, the teeth 58 of poles 40 and 48 are magnetized to be South polar by the coil 60, and the teeth on poles 44 and 52 to be North polar, with the remaining teeth on poles 42, 46, 50, and 54 unenergized, the teeth 36 are more forcefully attracted to the teeth 58 of poles 40 and 48 by virtue of the effect of the material 110. This increases the holding torque, that is, the tendency of the rotor 10 to stop in that particular angular position. North polar magnetization of the teeth or poles 44 and 52 causes complete repulsion of the stator pole 44 and the rotor segment 28 by virtue of both the teeth 58 and the material 110. The rotor flux is thus directed toward the closest South polar teeth, for example, the South polar teeth two poles away. According to one embodiment of the invention any permanent magnet material 110 poled as shown would produce some results of this nature. However, according to a preferred embodiment the flux from the materials 110 and 120 in the valleys of the stator teeth are greater than the flux from the opposite rotor teeth.

When the driver D now shifts the energization of the coils 60 so that the teeth on poles 42 and 50 are south polar and on poles 46 and 54 north polar with the remaining poles unenergized, the north polar surfaces on the material 110 concentrates the north polar flux from the teeth 36 on the magnet 10 angularly toward the teeth 58 in the poles 42 and 50, produces repulsion in the poles 46 and 54, and further repulsion in the unenergized poles. This angular flux flow at the teeth at pulses 42 and 50 draws the rotor 10 clockwise toward an alignment of the teeth 36 in the rotor and the teeth 58 in the poles 42 and 50. If, by the time such alignment occurs, the succeeding pulse makes the teeth 58 of the poles 44 and 52 south polar, the alignment at the poles 44 and 52 will be that which had occurred during the previous pulse at the poles 42 and 50. This results in further drawing the rotor 10 clockwise. Succeeding pulses then each continuously draw the rotor 10 clockwise. In other words, as the energization of the poles 40 to 54 shifts from S-O-N-O-S-O-N-O to O-S-O-N-O-S-O-N, and further to N-O-S-O-N-O-S-O, and onto O-N-O-S-O-N-O-S, etc. The rotor keeps rotating clockwise.

On the opposite end of the rotor the teeth 38 are offset from the teeth 36 by one-half of the tooth pitch.

5

Therefore, when teeth 58 on poles 40 and 48 face teeth 36 directly, the teeth 58 of the poles 52 and 44 face the teeth 38 on the stator portion 30. However, the rear stator portion is magnetized south polar. Therefore, the effect upon the rotation of the rotor by the poles 44 and 52 upon the rear of the rotor is the same as the effect of the poles 40 and 48 upon the front of the rotor. Generally stated, the stator poles effect on the rotor segment 28, e.g., pole such as 42 and 50, is the same as the effect of the poles 90 degrees therefrom, e.g., poles 46 and 54, upon the segment 30.

It is also known to energize the poles on a two-phase basis so as to produce the magnetizations S-S-N-N-S-S-N-N, N-S-S-N-N-S-S-N, N-N-S-S-N-N-S-S, etc. This type of energization is well known and the present invention also operates with such energization.

The operation of the motor is similar to that of the motor without the magnetic inserts 110. On the other hand, the magnetic inserts substantially improve the torque of the same motor without the inserts for the same currents applied. According to one example, the torque with a magnetic insert 110 is approximately 50 percent higher than the same motor without the inserts when each is operating at the same rated current.

While the theory upon which the present invention relies is not necessary for the purpose of patentability, the improvement provided by the present invention is believed to arise from the fact that the added permanent magnets overcome the negative torque component that is thought to occur at specific pole locations during each pulse of prior art motors, and to enhance the positive torque that is thought to occur during each pulse.

Figs. 6 and 7 illustrate another embodiment of the invention. Here the motor is in the form of a variable reluctance motor whose rotor 10 is composed of a soft magnetic material 130 from the front to the rear of the motor. The soft magnetic material may be in the form of laminations. The rotor 130 includes teeth 136 corresponding to the teeth 36 of Fig. 2. Located between the teeth 136 are inserts 138 extending from the front of the rotor to the rear and magnetized as shown, namely, so that the North pole is at the outer periphery and the South pole closer to the trough of the valleys between the teeth 136.

In Fig. 6, the poles 40 to 54 and the windings 60 correspond to those of Fig. 2. The valleys between the stator teeth 58 are filled with inserts magnetized as shown, namely, with South poles toward the crest of the teeth and North poles toward the trough of the valleys. When the stator inserts 140 are aligned with the rotor inserts 138, the magnetic fields aid each other, that is, north faces south. Thus, starting from the stator teeth valleys and ending in the rotor teeth valleys along the radially direction, the magnetic poles follow the sequence N-S-N-S. According to another embodiment of the invention, the poles follow the sequence S-N-S-N. In each case these magnetizations extend longitudinally from the front of the rotor and stator to the rear of the rotor and stator.

In the position shown in Fig. 6, the magnetic inserts 140 of the poles 40 and 48 aid the magnetization of the inserts 138 in the opposite rotor sections. On the other hand, the magnetic inserts 140 in the valleys of the poles 44 and 52 face the teeth of the opposite rotor sections. The inserts of the poles 42 and 50 tend to draw the rotor inserts 138 in a direction to move the rotor clockwise, and the corresponding inserts in the poles 46 and 54 tend to produce a counterclockwise movement in the rotor.

In operation, the windings 60 are excited to produce a rotating magnetic field around the rotor. For example, the teeth 58 of the stator may be polarized by the excitation of the windings 60 to produce the polarities S-N-N-S-S-N-N-S in the poles 40 to 54 during one pulse, S-S-N-N-S-S-N-N in the poles 40 to 54 during the next pulse, N-S-S-N-N-S-S-N in the poles 40 to 54 during the next pulse, etc. At the time of the first pulse, the appearance of S polarity in the teeth 58 of the pole 40 makes the entire inner peripheral surface of the pole 40, and also the pole 48 South polar, thereby diminishing the holding effect of the aiding magnetic fields produced by the inserts 138 and 140 at the pole 40. Simultaneously, the North polar magnetization of the teeth of the poles 42 and 50 draws the teeth of the rotor 10 and aids in the alignment of the inserts 138 and 140 at the poles 42 and 50 so as to draw the rotor 10 in the clockwise direction. The North polar teeth at the poles 44 and 52 attract the adjacent rotor teeth and aid in the clockwise torque, while the South polar teeth of the poles 46 and 54 make the entire inner periphery of the poles South polar. As a result, the rotor turns clockwise during this pulse period. The S-S-N-N-S-S-N-N magnetization of the poles 40 to 54 respectively during the next pulse period has similar affects, except upon the succeeding poles in the clockwise direction so as to move the rotor even further clockwise.

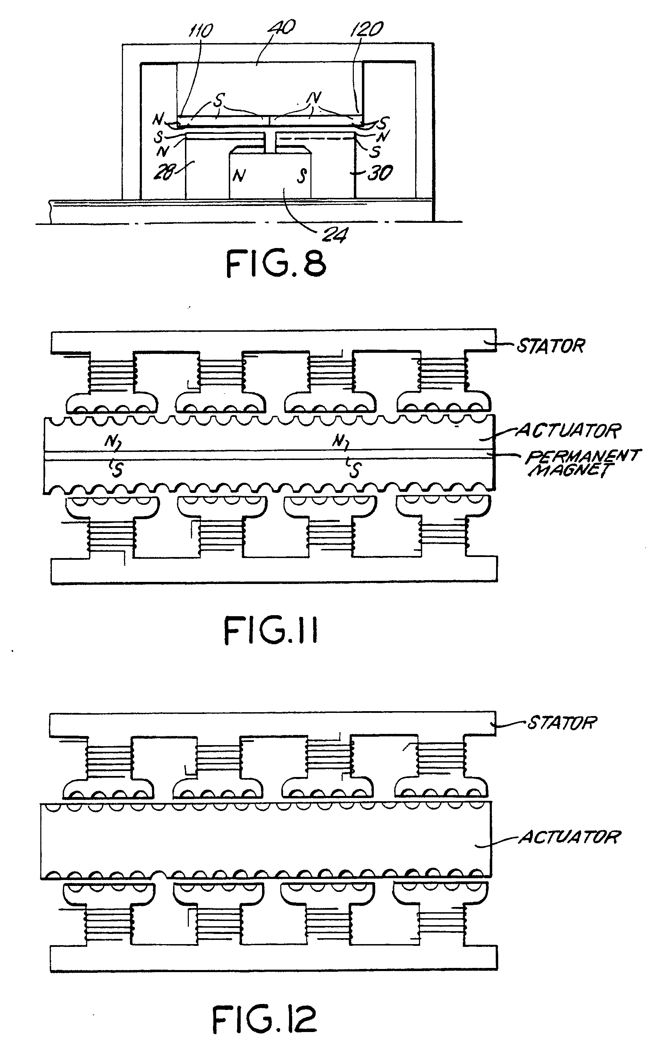

The invention may also be practiced with a motor such as Figs. 2 and 3 using inserts in the valleys between the teeth of the stator poles and the valleys between the teeth of the rotor. This embodiment is shown in Fig.8.

Preferably, the material of the inserts 110, 138, and 140 is samarium cobalt. According to another embodiment of the invention, the material is a neodymium boron iron alloy. Of course, materials such as Alnico may also be used. The term samarium cobalt refers to $SmCo_5$. However, it may also refer to

EP 0 183 792 B1

$Sm_2Co_{17}$.

The magnetic inserts 110, 138 and 140 are preferably formed by forming the ingredients into a powder, pressing the latter, sintering them, and gluing them into the valleys.

In the motors of Figs. 1 to 8, there is a relationship between the coercive force of the permanent magnetic material used for the inserts 110, 138, and the required ratio of axial depth to peripheral width of the inserts 110, 138. Insert materials of greater coercive force require smaller depth-to-width ratios for optimum operation. Materials of low coercive force require larger depth-to-width ratios. Conversely, motors with greater depths-to-width ratios can operate with lower coercive force materials, and motors with lesser depth-to-width ratios, need higher coercive force materials.

The following Table illustrates preferred ranges of depth to width ratios and coercive forces for various materials. In the Table, Width represents peripheral width and Depth the axial depth. The coercive forces are in Oersteds.

TABLE

| Material | Preferred Range of Depth-to Width Ratios | Preferred Range of Coercive Force in Oersteds | Desirable Depth-to Width Ratio | Typically Available Coercive Force in Oersteds |
|---|---|---|---|---|
| Alnico 8 | .8:1 to 5:1 | 1400 to 1900 | 4:1 | 1700 |
| Ceramic 1 | .8:1 to 5:1 | 1600 to 2100 | 4:1 | 1900 |
| Ceramic 8 | .5:1 to 5:1 | 2500 to 3300 | 3:1 | 3000 |
| $SmCo_5$ | .2:1 to 5:1 | 4000 to 9000 | .5:1 | 8000 |
| $Sm_2Co_{17}$ | .25:1 to 5:1 | 3000 to 8000 | .8:1 | 7000 |

The ranges in the Table represent what is presently known to be needed for producing at least a significant improvement in the operation of a hybrid motor such as in Figs. 2 and 3 having the same size, weight, and electrical input A significant improvement is defined as an increase in torque of 20% over a prior art hybrid (e.g. axially magnetized rotor) motor of equal size and weight energized by the same current.

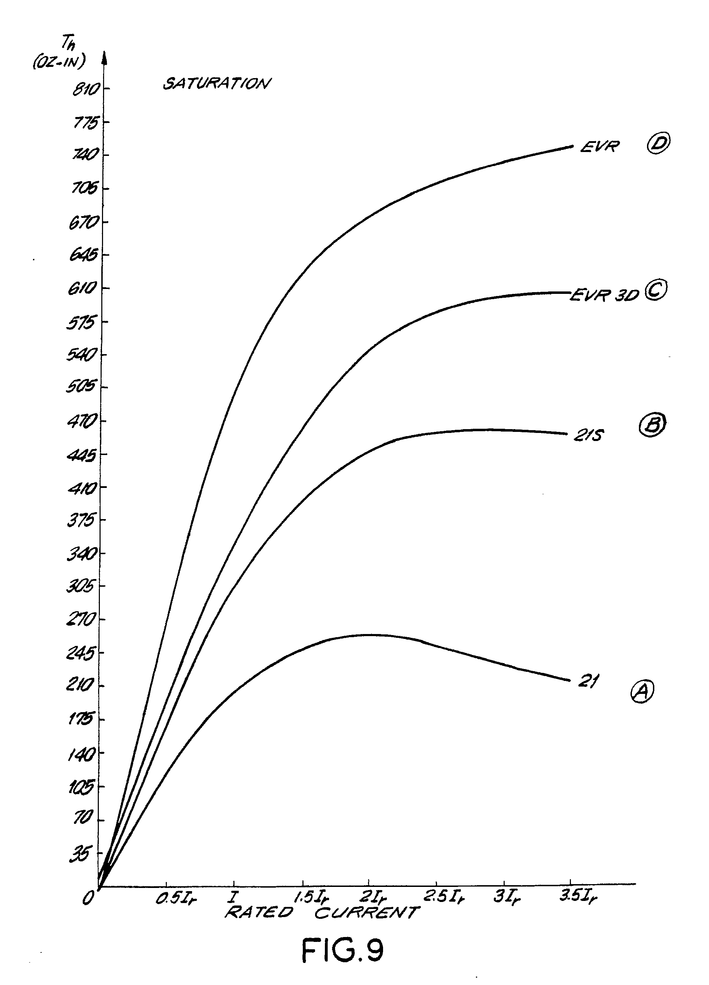

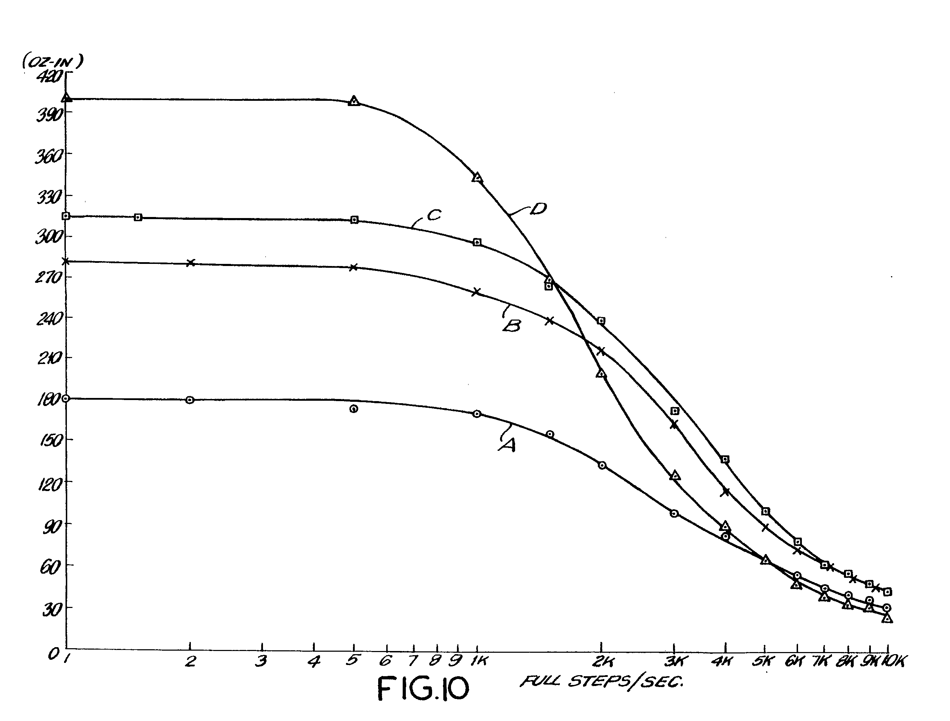

Figs. 9 and 10 are graphs illustrating characteristics of operation of motor manufactured according to the prior art and according to the embodiments of Figs. 2 and 3, 6 and 7, and 8. Fig. 9 compares the holding torque of the motors to rated current. In Fig. 10 the speed in full steps per second is compared with

7

the holding torque in ounce-inches with the motors were driven by substantially the same 35 volt bi-polar chopper at a rated current of 5.82 amperes. The holding torque was measured by applying a brake and measuring the maximum torque before stall. A linear relationship exists between stepping torque and holding torque such that the stepping torque is equal to .707 of the holding torque.

In Figs. 9 and 10, curves A represent operation of an ordinary prior art "hybrid" motor such as that shown in Figs. 2 and 3 without the samarium cobalt ($SmCO_5$) permanent magnet inserts. The curve B represents the operation of a corresponding motor modified according to the invention as embodied in Figs. 2 and 3 using $SmCo_5$ permanent magnet inserts. The curves C represent the operation of the embodiment shown in Fig. 8 using a hybrid motor with $SmCo_5$ inserts in rotor and stator tooth valleys. The curves D represent the operation of a motor corresponding to that used in Figs. 6 and 7, with samarium cobalt inserts 138 and 140 in the stator and rotor tooth valleys, i.e., with rotor teeth aligned axially and without a magnet between front and rear rotor sections. It will be seen that except at very high speeds, the holding torque, and hence, the stepping torque of motors embodying the invention is considerably greater than motors according to the prior art.

It should be recognized that in the motor of Figs. 6 and 7, the direction of the initial pulse of the motor determines the direction of the rotation.

The invention may also be embodied in a linear motor. Such a linear motor is shown in Fig. 11 wherein pole teeth valleys of the stator include magnetic material magnetized as shown. The linear motor of Fig. 11 corresponds to that of Figs. 2 and 3 in that the rotor material is magnetized.

Fig. 12 illustrates a linear motor corresponding to the motor of Figs. 6 and 7 wherein the rotor is composed of soft magnetic material.

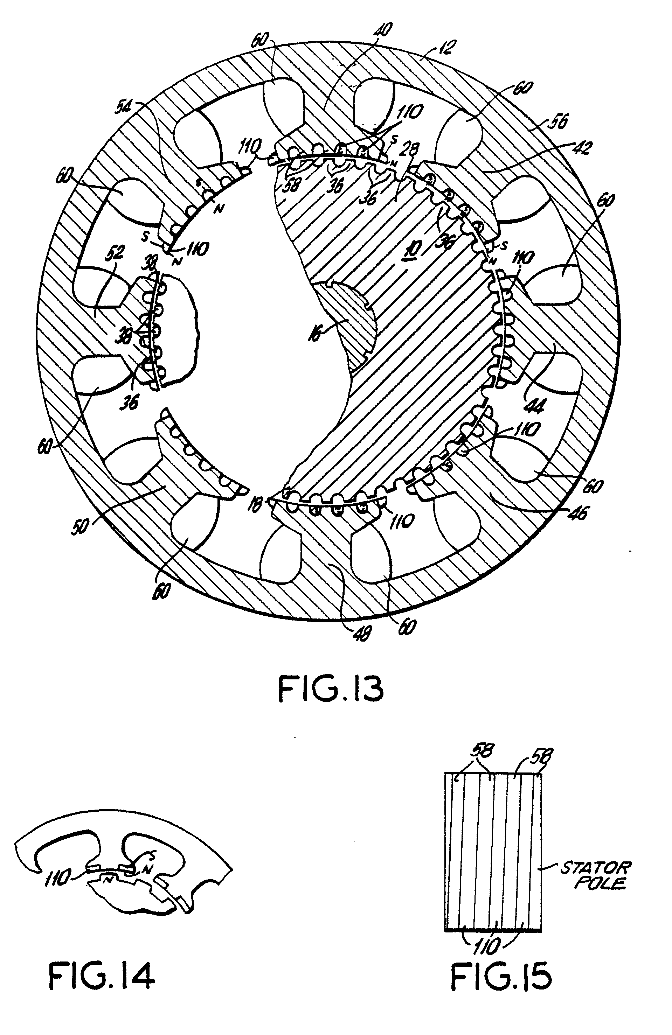

According to embodiments of the invention the permanent magnetic materials are also placed adjacent the end teeth of the stator poles. This is shown in Fig. 13. Where a stator pole has only one single tooth, the magnetic materials are secured adjacent the single tooth. This is shown in Fig. 14. These stator teeth may be used in any of the motors of the other embodiments shown.

The invention is applicable not only to stators and rotors with teeth parallel to the axis of rotation, but also to stators and rotors whose teeth are skewed by a fraction of a tooth pitch as shown in Fig. 15. Skewed teeth have the effect of smoothing the rotation of the rotors.

The term samarium cobalt as used with respect to Figs. 9 and 10 refers to $SmCo_5$. However, the invention also contemplates using $Sm_2Co_{17}$ for its higher coercivity. The term samarium cobalt is thus intended, with respect to Figs. 1 to 8 to refer both to $SmCo_5$ and $Sm_2Co_{17}$.

Stepping motors have existed for many years and various means have been attempted to increase the torque output. The present invention furnishes a substantial increase from prior art devices of same, weight, size, and electrical power inputs.

According to an embodiment of this invention, the hard permanent magnet materials are distributed in a matrix of thermo-plastic, thermo-setting plastic, or other matrix material, and appropriately wiped into the stator or rotor slots between the teeth. The magnetic material is thereafter magnetized.

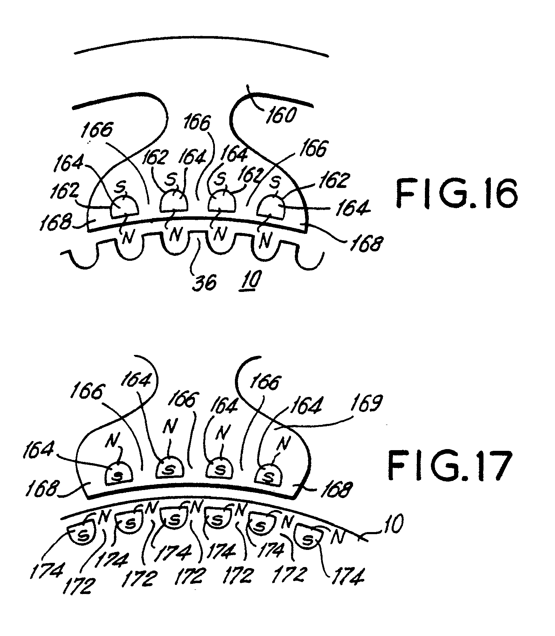

According to yet another embodiment of the invention, the structure of poles in the stator takes the form shown in Fig. 16. This Figure illustrates a part of the rotor 10 and a single stator pole corresponding to the poles 40 to 54 of Fig. 2, of a stator 160. The stator and its poles are formed of separate laminations by punching appropriate holes 162 in the laminations. The holes are aligned while stacking the laminations, and rods of magnetic material 164 placed within the openings and subsequently magnetized. In such a structure, the stator teeth correspond to the intervals 166 between the rods 164 and the edge portions 168 adjacent to the outside rods 164. It will be appreciated that in such a structure that all poles of the stator are constructed in accordance with the structure shown in Fig. 16.

According to still another embodiment, plastic magnetic material is wiped into the holes 162 before the lamination are stacked and then dried. The magnetic materials are thereafter magnetized.

Another embodiment of the invention involves stacking the laminations and wiping the materials into the aligned holes before magnetizing the material.

According to yet another embodiment of the invention, the rotor teeth and magnets are formed in a manner similar to that shown in Fig. 16 for the structure of Figs. 6 and 7. Fig. 17 illustrates a portion of a motor using the principle of the motor in Figs. 6 and 7 in which both the rotor and stator include magnetic materials between the teeth. In Fig. 17, the stator 169 corresponds to the stator 160 in Fig. 16. The rotor 170 includes "teeth" 172 formed in spaces between the magnetic inserts or magnetic materials 174. In both Figs. 16 and 17, the magnetic materials are magnetized radially as shown.

**Claims**

1. A stepping motor, including:
   (a) a stator (12);
   (b) a mover (10) movable relative to said stator and having surfaces facing the stator;
   (c) a plurality of poles (40,42,44...54) on said stator, the poles having actuating surfaces, said surfaces facing the mover;
   (d) a winding (60) on each of said poles;
   (e) a plurality spaced stator sections (58) of soft magnetic material at the surfaces of said poles, each of said poles having at least one section;
   (f) a plurality of spaced mover sections (36,136) of soft magnetic material at the surfaces facing the stator and located for movement along areas in a direction past said stator pole sections;
   (g) the facing sections of the stator and mover creating gaps between said sections, selective energization of the poles creating flux paths between oppositely energized stator poles which transverse two gaps and the mover; and
   (h) spaces formed by said mover sections and said stator sections, said spaces being positioned along the areas of relative mover-stator movement and having depths transverse to the areas of movement;
   characterized in that said motor further includes:
   (i) a plurality of permanently magnetized inserts (110,138,140) located adjacent the plurality of stator sections and/or the plurality of mover sections, which inserts are poled in the direction of the depth of the spaces transverse to the areas.

2. A motor according to claim 1, wherein said inserts are located in spaces adjacent the stator sections of soft magnetic material.

3. A motor according to claim 1, wherein said inserts are located in spaces adjacent the mover sections of soft magnetic material.

4. A motor according to claim 1, wherein said inserts are located in the spaces adjacent the mover sections and stator sections of soft magnetic material.

5. A motor according to any one of claims 1 to 3, wherein said mover sections extend substantially transverse to the direction of movement and to the direction of the depth.

6. A motor according to any one of claims 1 to 3, wherein said mover sections are skewed relative to an orientation transverse to the direction of movement and to the depth by a fraction of a tooth pitch.

7. A motor according to any one of claims 1 to 6, wherein said permanent magnetic inserts include samarium cobalt.

8. A motor according to any one of claims 1 to 6, wherein said permanent magnetic inserts include a neodymium-boron alloy.

9. A motor according to any one of claims 1 to 8, wherein said mover is a linear actuator and said poles are linearly aligned.

10. A motor according to any one of claims 1 to 8, wherein said mover is a rotor for rotating about an axis relative to said stator.

11. A motor according to claim 9 or 10, wherein said mover sections are divided into two axially extending sets axially displaced from each other, said sets being magnetized in opposite directions, said stator sections being divided into portions each facing one of the sets the inserts in one of said sets being magnetized along the depth in one direction and the inserts in the other of said sets being magnetized along the depth in the opposite direction.

12. A motor according to claim 11, wherein the magnetic pole on each of the inserts facing a set of magnetized rotor sections is poled to oppose the magnetization of the set of rotor sections facing the insert.

13. A motor according to any one of claims 4 to 12, wherein the inserts in said stator spaces and the inserts in said mover spaces are poled so that when a mover insert faces a stator insert the magnetization of the poles facing each other are of opposite polarity.

14. A motor according to any one of claims 1 to 13, wehrein the coercive force and dimensions of the inserts is sufficiently great to produce a significant improvement in the operation of a motor of the same size, weight, and electrical power input.

15. A motor according to any one of claims 1 to 14, wherein the spaces of said stator includes a plurality of holes in a direction transverse to the direction of movement of the mover and to the depth of the spaces, and said inserts are mounted in said holes.

16. A motor according to any one of claims 1 to 15, wherein said mover includes a plurality of holes with magnetic inserts in said holes.

17. A motor according to claim 15 or 16, wherein the holes are spaced from the surfaces.

18. A motor according to any one of claims 2 to 14, wherein said mover sections are teeth and said stator sections are teeth.

**Revendications**

1. Moteur pas à pas, comprenant :

    (a) un stator (12) ;

    (b) une partie mobile (10) mobile relativement audit stator et ayant des surfaces faisant face au stator ;

    (c) un certain nombres de pôles (40, 42, 44... 54) sur ledit stator, les pôles ayant des surfaces d'actionnement, lesdites surfaces étant face à la partie mobile ;

    (d) un enroulement (60) sur chacun desdits pôles ;

    (e) un certain nombre de sections espacées de stator (58) en un matériau magnétique doux aux surfaces desdits pôles, chacun desdits pôles ayant au moins une section tournées vers le stator et placées pour un mouvement le long de zones dans une direction au-delà desdites sections de pôles du stator ;

    (f) un certain nombre de sections espacées de partie mobile (36, 136) en un matériau magnétique doux aux surfaces ;

    (g) les sections en vis-à-vis du stator et de la partie mobile créant des intervalles entre lesdites sections, une excitation sélective des pôles créant des trajets de flux entre des pôles de stator excités de manière opposée, qui traversent deux intervalles et la partie mobile ; et

    (h) des espaces formés par lesdites sections de la partie mobile et lesdites sections du stator, lesdits espaces étant placés le long des zones du mouvement relatif partie mobile-stator ayant des profondeurs transversales aux zones du mouvement ;

    ⸳caractérisé en ce que ledit moteur comprend de plus :

    (i) un certain nombre d'inserts magnétisés en permanence (110, 138, 140) placés adjacents aux sections de stator et/ou aux sections de la partie mobile, lesquels inserts sont polarisés dans la direction de la profondeur des espaces transversaux aux zones.

2. Moteur selon la revendication 1, où lesdits inserts sont placés dans des espaces adjacents aux sections de stator en un matériau magnétique doux.

3. Moteur selon la revendication 1, où lesdits inserts sont placés dans des espaces adjacents aux sections de la partie mobile en un matériau magnétique doux.

4. Moteur selon la revendication 1, où lesdits inserts sont placés dans les espaces adjacents aux sections de la partie mobile et aux sections du stator en un matériau magnétique mou.

5. Moteur selon l'une quelconque des revendications 1 à 3, où lesdites sections de la partie mobile s'étendent sensiblement transversalement à la direction du mouvement et à la direction de la

EP 0 183 792 B1

profondeur.

**6.** Moteur selon l'une quelconque des revendications 1 à 3, où lesdites sections de la partie mobile sont obliques relativement à une orientation transversale à la direction du mouvement et à la profondeur d'une fraction de pas des dents.

**7.** Moteur selon l'une quelconque des revendications 1 à 6, où lesdits inserts magnétiques permanents comprennent du samarium cobalt.

**8.** Moteur selon l'une quelconque des revendications 1 à 6, où lesdits inserts magnétiques permanents comprennent un alliage néodyme-bore.

**9.** Moteur selon l'une quelconque des revendications 1 à 8, où ladite partie mobile est un moyen linéaire d'actionnement et lesdits pôles sont alignés linéairement.

**10.** Moteur selon l'une quelconque des revendications 1 à 8, où ladite partie mobile est un rotor pour une rotation autour d'un axe relatif audit stator.

**11.** Moteur selon la revendication 9 ou 10, où lesdites sections de partie mobile sont divisées en deux groupes s'étendant axialement, axialement décalés l'un de l'autre, lesdits groupes étant magnétisés en directions opposées, lesdites sections de stator étant divisées en portions, chacune faisant face à l'un des groupes, les inserts de l'un desdits groupes étant magnétisés le long de la profondeur dans une direction et les inserts dans l'autre desdits groupes étant magnétisés le long de la profondeur en direction opposée.

**12.** Moteur selon la revendication 11, où le pôle magnétique sur chacun des inserts faisant face à un groupe de sections magnétisées de rotor est polarisé pour s'opposer à la magnétisation du groupe des sections du rotor faisant face à l'insert.

**13.** Moteur selon l'une quelconque des revendications 4 à 12, où les inserts dans lesdits espaces du stator et les inserts dans lesdits espaces de la partie mobile sont polarisés de manière que lorsqu'un insert de la partie mobile se trouve face à un insert du stator, la magnétisation des pôles se faisant.face soit de polarité opposée.

**14.** Moteur selon l'une quelconque des revendications 1 à 13 où le champ coercitif et les dimensions des inserts sont suffisamment grands pour produire une amélioration importante du fonctionnement d'un moteur de la même taille, du même poids et de la même puissance électrique d'entrée.

**15.** Moteur selon l'une quelconque des revendications 1 à 14 où les espaces dudit stator comprennent un certain nombre de trous dans une direction transversale à la direction du mouvement de la partie mobile et à la profondeur des espaces et lesdits inserts sont montés dans lesdits trous.

**16.** Moteur selon l'une quelconque des revendications 1 à 15, où ladite partie mobile comprend un certain nombre de trous avec des inserts magnétiques dans lesdits trous.

**17.** Moteur selon la revendication 15 ou 16, où les trous sont espacés des surfaces.

**18.** Moteur selon l'une quelconque des revendications 2 à 14, où lesdites sections de la partie mobile sont des dents et lesdites sections du stator sont des dents.

**Patentansprüche**

**1.** Schrittmotor umfassend
(a) einen Stator (12);
(b) ein Triebwerk bzw. eine Bewegungsvorrichtung (10), das bzw. die in bezug auf den Stator bewegbar ist und dem Stator zugewandte Oberflächen aufweist;
(c) eine Vielzahl von Polen (40, 42, 44....54) auf dem genannten Stator, welche Pole Betätigungsflächen aufweisen, welche genannte Flächen dem Triebwerk bzw. der Bewegungsvorrichtung zuge-

11

wandt sind;

(d) eine Wicklung (60) auf jedem der genannten Pole;

(e) eine Vielzahl von im Abstand voneinander angeordneten Statorabschnitten (58) aus weichem magnetischem Material an den Oberflächen der genannten Pole, wobei jeder der genannten Pole wenigstens einen Abschnitt aufweist;

(f) eine Vielzahl von im Abstand voneinander angeordneten Triebwerk- bzw. Bewegungsvorrichtungsabschnitten (36, 136) aus weichem magnetischem Material an den dem Stator zugewandten Oberflächen, die für die Bewegung entlang Bereichen in einer Richtung an den genannten Statorpolabschnitten vorbei positioniert sind;

(g) die einander zugewandten Abschnitte des Stators und des Triebswerks bzw. der Bewegungsvorrichtung Zwischenräume bzw. Spalten zwischen den genannten Abschnitten schaffend und die selektive Erregung der Pole Flußbahnen zwischen entgegengesetzt erregten Statorpolen erzeugend, die zwei Zwischenräume bzw. Spalten und das Triebwerk bzw. die Bewegungsvorrichtung durchlaufen;

und

(h) Räume, die von den genannten Triebwerks- bzw. Bewegungsvorrichtungsabschnitten und den genannten Statorabschnitten gebildet werden, welche genannten Räume entlang den Bereichen der relativen Triebwerks-Stator-Bewegung positioniert sind und Tiefen in Querrichtung zu den Bewegungsbereichen aufweisen;

dadurch gekennzeichnet, daß der genannte Motor weiters umfaßt:

(i) eine Vielzahl von permanent magnetisierten Einsätzen (110, 138, 140), die angrenzend an die Vielzahl von Statorabschnitten und/oder die Vielzahl von Triebwerks- bzw. Bewegungsvorrichtungsabschnitten angeordnet sind, welche Einsätze in Richtung der Tiefe der Räume in Querrichtung zu den Bereichen gepolt sind.

2. Motor nach Anspruch 1, worin die genannten Einsätze in Räumen angrenzend an die Statorabschnitte aus weichem magnetischem Material positioniert sind.

3. Motor nach Anspruch 1, worin die genannten Einsätze in Räumen angrenzend an die Triebwerks- bzw. Bewegungsvorrichtungsabschnitte aus weichem magnetischem Material positioniert sind.

4. Motor nach Anspruch 1, worin die genannten Einsätze in den Räumen angrenzend an die Triebwerks- bzw. Bewegungsvorrichtungsabschnitte und Statorabschnitte aus weichem magnetischem Material positioniert sind.

5. Motor nach einem der Ansprüche 1 bis 3, worin die genannten Triebwerks- bzw. Bewegungsvorrichtungsabschnitte sich im wesentlichen quer zur Richtung der Bewegung und zur Richtung der Tiefe erstrecken.

6. Motor nach einem der Ansprüche 1 bis 3, worin die genannten Triebwerks- bzw. Bewegungsvorrichtungsabschnitte im Verhältnis zu einer Orientierung quer zur Bewegungsrichtung und zur Tiefe um einen Bruchteil einer Zahnteilung abgeschrägt bzw. gegehrt sind.

7. Motor nach einem der Ansprüche 1 bis 6, worin die genannten permanentmagnetischen Einsätze Samariumkobalt enthalten.

8. Motor nach einem der Ansprüche 1 bis 6, worin die genannten permanentmagnetischen Einsätze eine Neodymium-Bor-Legierung enthalten.

9. Motor nach einem der Ansprüche 1 bis 8, worin das genannte Triebwerk bzw. die genannte Bewegungsvorrichtung eine lineare Betätigungsvorrichtung ist und die genannten Pole linear ausgerichtet sind.

10. Motor nach einem der Ansprüche 1 bis 8, worin das genannte Triebwerk bzw. die Bewegungsvorrichtung ein Rotor für die Drehung um eine Achse in bezug auf den genannten Stator ist.

11. Motor nach Anspruch 9 oder 10, worin die genannten Triebwerks- bzw. Betätigungsvorrichtungsabschnitte in zwei sich axial erstreckende Sätze geteilt sind, die axial in bezug aufeinander versetzt sind, die genannten Sätze in entgegengesetzten Richtungen magnetisiert sind, die genannten Statorabschnitte in Teile geteilt sind, von denen jeweils einer einem der Sätze zugewandt ist, wobei die Einsätze in einem der genannten Sätze entlang der Tiefe in einer Richtung magnetisiert sind und die Einsätze im anderen der genannten Sätze entlang der Tiefe in der entgegensetzten Richtung magnetisiert sind.

12. Motor nach Anspruch 11, worin der Magnetpol auf jedem der Einsätze, die einem Satz von magnetisierten Rotorabschnitten zugewandt ist, so gepolt ist, daß er der Magnetisierung des Satzes von Rotorabschnitten, die dem Einsatz zugewandt sind, entgegenwirkt.

13. Motor nach einem der Ansprüche 4 bis 12, worin die Einsätze in den genannten Statorräumen und die Einsätze in den genanten Triebwerks- bzw. Bewegungsvorrichtungsräumen so gepolt sind, daß, wenn ein Triebwerkseinsatz einem Statoreinsatz zugewandt ist, die Magnetisierung der einander zugewandten Pole von entgegengesetzter Polarität ist.

14. Motor nach einem der Ansprüche 1 bis 13, worin die Koerzitivkraft und die Dimensionen der Einsätze groß genug sind, um eine signifikante Verbesserung im Betrieb eines Motors von der gleichen Größe, vom gleichen Gewicht und von gleicher elektrischer Leistungsaufnahme zu erzielen.

15. Motor nach einem der Ansprüche 1 bis 14, worin die Räume im genannten Stator eine Vielzahl von Löchern in einer Richtung quer zur Bewegungsrichtung des Triebwerks bzw. der Bewegungsvorrichtung und zur Tiefe der Räume aufweisen und die genannten Einsätze in den genannten Löchern montiert sind.

16. Motor nach einem der Ansprüche 1 bis 15, worin das genannte Triebwerk bzw. die Bewegungsvorrichtung eine Vielzahl von Löchern umfaßt, in welchen genannten Löchern Magneteinsätze angeordnet sind.

17. Motor nach Anspruch 15 oder 16, worin die Löcher im Abstand von der Oberfläche angeordnet sind.

18. Motor nach einem der Ansprüche 2 bis 14, worin die genannten Triebwerks- bzw. Bewegungsvorrichtungsabschnitte Zähne sind und die genannten Statorabschnitte Zähne sind.

INPUT PULSES

DRIVER

DIRECTION

MOTOR

FIG.1

FIG.2

FIG.3

FIG.4

FIG.5

FIG.6

FIG.7

16

**FIG. 8**

**FIG. 11**

**FIG. 12**

FIG.9

FIG.10

(OZ-IN)

FULL STEPS/SEC.

EP 0 183 792 B1

FIG.13

FIG.14

FIG.15

FIG.16

FIG.17